# EUROPÄISCHE PATENTANMELDUNG

(11) **EP 4 691 238 A1**
(43) Veröffentlichungstag der Anmeldung: **11.02.2026**
(21) Anmeldenummer: 24193830.7
(22) Anmeldetag: 09.08.2024
(51) Int. Cl.: A01N 25/08, A01N 25/14, A01N 25/22, A01P 7/04, A01P 7/00, A01P 19/00, A01P 17/00

(54) **FESTSTOFFGEMISCH UND DESSEN VERWENDUNG**

(71) Anmelder: Lithos Crop Protect GmbH, 4482 Ennsdorf (AT)
(72) Erfinder: Fentsyk, Serhiy, 4482 Ennsdorf (AT); Kublitski, Vadim, 4482 Ennsdorf (AT)
(74) Vertreter: Schwarz & Partner Patentanwälte GmbH

(57) **Zusammenfassung**

Die vorliegende Patentanmeldung betrifft ein Feststoffgemisch umfassend
- 30 bis 90 Gew% mindestens eines Zeoliths,
- 1 bis 30 Gew% mindestens eines biologisch abbaubaren Oligosaccharids und/oder mindestens eines biologisch abbaubaren Polysaccharids,
- 5 bis 30 Gew% mindestens eines Schichtsilikats, und
- 0,001 bis 10 Gew% mindestens eines gegen Insekten wirksamen Wirkstoffs.

## Beschreibung

### TECHNISCHES GEBIET

Die vorliegende Erfindung betrifft das Gebiet der Pflanzenschutzmittel, insbesondere des Schutzes von Pflanzen vor Insektenschädlingen.

### HINTERGRUND DER ERFINDUNG

Die Verwendung von Insektiziden ist seit Langem eine effektive Methode zur Bekämpfung von Schädlingsinsekten in der Landwirtschaft und im Haushalt. In den letzten Jahrzehnten hat sich die Forschung intensiv auf die Entwicklung von neuen und verbesserten Insektiziden konzentriert, um die Wirksamkeit zu erhöhen und gleichzeitig die Umweltauswirkungen zu minimieren. Der Stand der Technik beinhaltet eine Vielzahl von chemischen und biologischen Insektiziden, die unterschiedliche Wirkungsweisen gegen verschiedene Arten von Schädlingen aufweisen.

Die Ausbringung von Insektiziden ist ein wichtiger Bestandteil der Landwirtschaft, um Schädlinge effektiv zu bekämpfen und die Ernte zu schützen. In der Vergangenheit wurden verschiedene Methoden und Technologien zur Ausbringung von Insektiziden entwickelt, um die Effizienz und Wirksamkeit zu maximieren.

Es werden derzeit verschiedene Ausbringungsarten von Insektiziden angewendet, darunter Sprüh- und Streumethoden, Injektionen, Granulierung und Rauchanwendung. Jede dieser Methoden hat ihre eigenen Vor- und Nachteile, die es zu berücksichtigen gilt. Sprühmethoden sind zum Beispiel weit verbreitet und effektiv, können jedoch zu Umweltbelastungen führen und erfordern eine genaue Dosierung. Streumethoden hingegen sind einfach in der Anwendung, aber weniger präzise in der Verteilung. All diesen Methoden ist gemein, dass das Insektizid nach dem Ausbringen der Wirkstoffzusammensetzung rasch verfügbar ist und dementsprechend - vor allem durch Umwelteinflüsse - wieder rasch aus dem Feld entfernt wird. Dadurch ist es nötig Insektizide kontinuierlich und/oder in hohen Dosen auszubringen, was wiederum die Umwelt und die Landwirte finanziell belasten.

Um die Auswirkungen auf die Umwelt zu minimieren und eine nachhaltige Schädlingsbekämpfung zu gewährleisten, werden seit geraumer Zeit Mittel und Verfahren zur verzögerten Freigabe der Insektizide eingesetzt. Die Ausbringungsarten werden vor allem durch spezielle Beschichtungen oder Kapselungstechniken realisiert. Diese Techniken ermöglichen es, das Insektizid so zu umhüllen, dass es kontrolliert freigesetzt wird und dadurch seine Wirkung über einen längeren Zeitraum entfalten kann. Allerdings gibt es noch einige Einschränkungen bei der Anwendung dieser Techniken, die es zu überwinden gilt.

Eine der größten Herausforderungen bei der Entwicklung von Mitteln zur verzögerten Freisetzung von Insektiziden ist die Auswahl des geeigneten Trägermaterials. Das Trägermaterial muss nicht nur dafür sorgen, dass das Insektizid kontrolliert freigesetzt wird, sondern auch dafür, dass es sich optimal an die Umweltbedingungen anpasst und somit eine effektive Wirkung erzielt. Um die Umweltbelastung so gering wie möglich zu halten, sollte das Trägermaterial biologisch abbaubar oder neutral bzw. inert zur Natur sein, um keine Schäden zu verursachen und positive Auswirkungen zu gewährleisten.

Eine weitere Herausforderung besteht darin, die optimale Freisetzungsrate des Insektizids zu bestimmen. Die Freisetzung des Insektizids sollte so gesteuert werden, dass eine kontinuierliche Wirksamkeit gewährleistet ist, aber gleichzeitig eine Überdosierung vermieden wird. Hier sind Techniken, wie zum Beispiel die Verwendung von Nano- oder Mikrokapseln, gefragt, um die Freisetzungsrate präzise zu steuern. Insbesondere Nano- und Mikrokapseln weisen den Nachteil auf, dass diese Mikroplastik umfassen und an die Umwelt freigeben.

Zur verzögerten Freisetzung von Insektiziden werden heutzutage meist beschichtete oder unbeschichtete Partikel verwendet, in denen das Insektizid eingebracht ist. Diese Partikel werden in Wasser suspendiert und auf das behandelnde Feld ausgebracht. Die Verwendung von Partikeln mit verzögerter Insektizidfreisetzung hat insbesondere wirtschaftliche und aufgrund der Freisetzung von Mikroplastik umwelttechnische Nachteile, da die Herstellung dieser Partikel aufwändig und teuer ist. Zudem hat der Anwender nicht die Flexibilität die Freisetzungsrate und die Insektizidzusammensetzung selbst zu beeinflussen, da die Partikel mit verzögerter Insektizidfreisetzung nur anwendungsfertig bezogen werden können.

Es ist daher eine Aufgabe der vorliegenden Erfindung eine Zusammensetzung bereitzustellen, die die Nachteile herkömmlicher Mittel zur verzögerten Freisetzung von gegen Insekten wirksamen Verbindungen, wie Insektiziden und Pheromonen, überwindet.

### ZUSAMMENFASSUNG DER ERFINDUNG

Die vorliegende Erfindung betrifft daher ein Feststoffgemisch umfassend
- 30 bis 90 Gew% mindestens eines Zeoliths,
- 1 bis 30 Gew% mindestens eines biologisch abbaubaren Oligosaccharids und/oder mindestens eines biologisch abbaubaren Polysaccharids,
- 5 bis 30 Gew% mindestens eines Schichtsilikats, und
- 0,001 bis 10 Gew% mindestens eines gegen Insekten wirksamen Wirkstoffs.

Die erfindungsgemäße Zusammensetzung bzw. das erfindungsgemäße Feststoffgemisch kann in Wasser suspendiert auf Pflanzen aufgebracht werden. Während das Wasser nach dem Aufbringen auf die Pflanzen verdunstet, bilden sich auf den Blättern, beispielsweise, mikroskopisch/makroskopisch kleine Kapseln/Tropfen, die die Wirkstoffe umschließen. Dieser Effekt kann als "post encapsulation" bezeichnet werden. Dies geschieht durch die Interaktion der biologisch abbaubaren Oligo- und/oder Polysaccharide und der anderen Bestandteile der Zusammensetzung bzw. des Gemisches. Dadurch wird eine kontrollierte Abgabe des darin befindlichen Wirkstoffs bzw. der darin befindlichen Wirkstoffe ermöglicht. Die Geschwindigkeit der Freisetzung der Wirkstoffe kann durch die Mengenverhältnisse der Komponenten des Feststoffgemisches, insbesondere des Zeolithes, des mindestens einen biologisch abbaubaren Oligo- und/oder Polysaccharids und der mindestens eines Schichtsilicates, und den Umgebungsbedingungen wie Temperatur und Feuchtigkeit beeinflusst werden.

Es hat sich gezeigt, dass die erfindungsgemäße Zusammensetzung bzw. das erfindungsgemäße Feststoffgemisch eine gleichmäßige Verteilung und Haftung der Inhaltsstoffe auf Blattoberflächen ermöglicht. Dies ist dahingehend von Vorteil, dass die Freigabe des bzw. der Wirkstoffe örtlich und zeitlich gleichmäßig verteilt erfolgt. Durch diese kontrollierte Freisetzung der Wirkstoffe wird eine langanhaltende Wirkung erzielt. Dies reduziert die Notwendigkeit häufiger Anwendungen und minimiert den Gesamtverbrauch an Pflanzenschutzmitteln. Die Verwendung Natur konformen Inhaltstoffen und die reduzierte Menge an erforderlichen Chemikalien machen diese Technologie umweltfreundlicher im Vergleich zu herkömmlichen Pflanzenschutzmethoden. Wirkstoffverluste während der Applikation auf Pflanzen sind ein häufiges Problem bei bekannten Wirkstoffformulierungen. Im Vergleich zu den bisher bekannten und verwendeten Technologien, vor allem mit beschichtetem und flüchtigem Wirkstoff umfassenden Partikeln/Kapseln, kann mit dem erfindungsgemäßen Feststoffgemisch, eine Restmenge des Wirkstoffs nach der Anwendung von 50 % und höher erzielt werden. Zudem zeigt die Verwendung des erfindungsgemäßen Feststoffgemisches eine gleichmäßigere Wirkstoffabgaberate als bisher bekannte Formulierungen, die in der Regel während oder kurz nach dem Auftragen auf den Pflanzen am meisten Wirkstoff verlieren. Dadurch kann die Abgaberate des Wirkstoffes signifikant verlängert werden.

Ein weiterer Aspekt der vorliegenden Erfindung betrifft einen Kit umfassend
a) ein Behältnis umfassend mindestens ein Zeolith wie hier definiert,
b) ein Behältnis umfassend mindestens ein biologisch abbaubares Oligosaccharid und/oder Polysaccharid wie hier definiert,
c) ein Behältnis umfassend mindestens ein Schichtsilikat wie hier definiert, und
d) ein Behältnis umfassend mindestens einen gegen Insekten wirksamen Wirkstoff wie hier definiert.

Um dem Anwender die Möglichkeit zu geben das erfindungsgemäße Feststoffgemisch in den oben definierten Bereichen zu variieren, können die einzelnen Komponenten des Feststoffgemisches getrennt voneinander in Behältnissen bereitgestellt werden. Alternativ ist es auch möglich, dass in einem Behältnis mehr als eine Komponente, z.B. zwei oder drei Komponenten, vorhanden sind.

Ein noch weiterer Aspekt der vorliegenden Erfindung betrifft eine Suspension umfassend ein erfindungsgemäßes Feststoffgemisch.

Das erfindungsgemäße Feststoffgemisch kann auch in Form einer Suspension vorliegen. Die Suspension kann das Feststoffgemisch in einer Konzentration umfassen, die direkt auf Pflanzen aufgebracht werden kann. Die Suspension ist für "ready-touse" Anwendungen geeignet. Vor allem aber nicht begrenzt für Heimanwendungen, bei denen geringe Mengen des erfindungsgemäßen Feststoffgemisches benötigt werden, eignen sich diese Suspensionen.

Ein weiterer Aspekt der vorliegenden Erfindung betrifft ein Verfahren zum Behandeln von Pflanzen oder Pflanzenteilen umfassend die Schritte:
a) Vermischen eines erfindungsgemäßen Feststoffgemisches mit Wasser im Gewichtsverhältnis 1:1 bis 1:500 zur Herstellung einer wässrigen Suspension, und
b) Aufbringen der wässrigen Suspension aus Schritt a) auf eine Pflanze oder einem Pflanzenteil.

### KURZBESCHREIBUNG DER FIGUREN

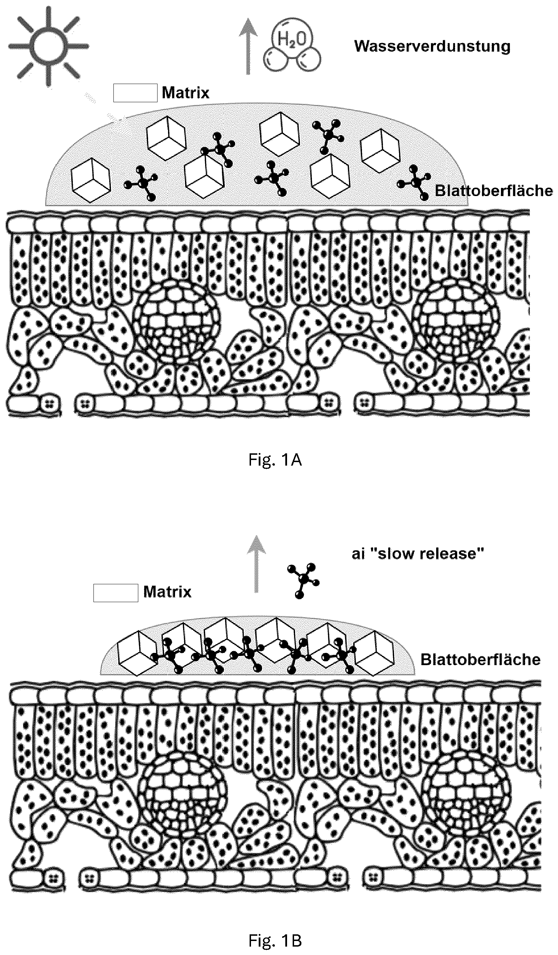

Fig. 1 zeigt den Querschnitt eines Blattes auf dem das erfindungsgemäße Feststoffgemisch mit Wasser vermischt aufgebracht wurde (A). Nach Wasserverdunstung bildet sich an der Oberfläche des Blattes eine Matrix, in der der freizusetzende Wirkstoff eingebettet ist (B). Der Wirkstoff wird über die Zeit langsam freigesetzt ("slow release").

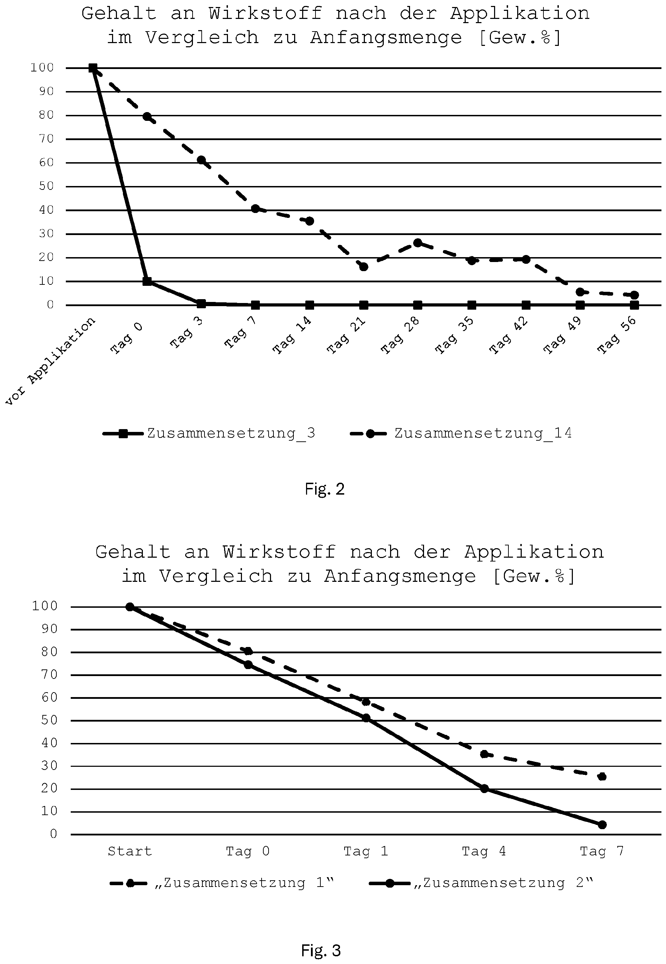

Fig. 2 zeigt einen Vergleich zweier Wirkstoffträger (Zeolith und Bentonite) in Hinblick auf ihre Wirkstoffrückhaltefähigkeit über die Zeit.
Fig. 3 zeigt einen Vergleich zwei Zusammensetzungen mit und ohne synergistischen Einfluss der Kombination von Schichtsilikaten und biologisch abbaubaren Sacchariden auf die langfristige Freisetzung von Wirkstoffen nach der Applikation. Der Gehalt an Wirkstoff nach der Applikation wird im Vergleich zur Anfangskonzentration bis nach 56 Tagen in [Gew. %] gemäß Beispiel 4 gezeigt.

### BESCHREIBUNG DER AUSFÜHRUNGSFORMEN

"Feststoffgemisch", wie hier verwendet, bezieht sich auf eine Mischung aus verschiedenen Feststoffen, die durch physikalische Verfahren getrennt werden können. Es handelt sich um eine heterogene Mischung, da die einzelnen Bestandteile des Gemischs in unterschiedlichen Konzentrationen und Zusammensetzungen vorliegen. Die Bestandteile eines Feststoffgemischs können unterschiedliche physikalische und chemische Eigenschaften aufweisen, was es ermöglicht, sie durch verschiedene Trennverfahren zu trennen. Im Sinne der vorliegenden Erfindung liegen das mindestens ein Zeolith, das mindestens eine biologisch abbaubare Oligosaccharid und/oder Polysaccharid, das mindestens eine Schichtsilikat, und der mindestens eine gegen Insekten wirksame Wirkstoff als einzelne voneinander physikalisch trennbare Komponenten im Feststoffgemisch vor.

"Biologisch abbaubare Oligosaccharide" und "biologisch abbaubare Polysaccharid", wie hier verwendet, sind natürliche oder synthetische Polymere, die aus einer Kette von Zuckerbausteinen bestehen und auf natürliche Weise von Mikroorganismen oder Enzymen abgebaut werden können. Biologisch abbaubare Oligo- bzw. Polysaccharide können aus verschiedenen Zuckerbausteinen wie Glucose, Fructose, Galactose oder anderen Monosacchariden hergestellt werden. Die Verwendung von biologisch abbaubaren Oligo- bzw. Polysacchariden im erfindungsgemäßen Feststoffgemisch ist besonders vorteilhaft, dass diese in der Lage sind, nach Suspendieren in Wasser und anschließendem Auftragen auf Pflanzen durch Verdunstung von Wasser eine Matrix auf der Pflanzenoberfläche auszubilden, in die die weiteren Bestandteile des erfindungsgemäßen Feststoffgemisches eingebettet werden können. Vor allem in Kombination mit mindestens einer Kieselsäure und/oder mindestens eines Salzes davon lässt sich eine Matrix herstellen, die Wirkstoffe langfristig an die Umwelt abgibt. Da die erfindungsgemäß eingesetzten Oligo- bzw. Polysaccharide biologisch abbaubar sind, werden diese im Laufe der Zeit von vorhandenen Mikroorganismen in ihre Monosaccharide abgebaut und/oder auf sonstige Weise verwertet.

"Gegen Insekten wirksame Wirkstoffe", wie hier verwendet, umfassen Verbindungen synthetischen oder natürlichen Ursprungs, die zur Bekämpfung von Insekten eingesetzt werden können. Die Wirkstoffe können u.a. synthetische chemische Verbindungen, natürliche Pflanzenextrakte oder biologische Wirkstoffe wie Bakterien oder Pilze. Die Auswahl des geeigneten Wirkstoffs hängt u.a. von der Art der Insekten ab, die bekämpft werden sollen. Die Wirkstoffe können Insekten abtöten, vertreiben oder verwirren, damit sich diese nicht mehr vermehren können.

"Mindestens ein", wie hier verwendet, umfasst mindestens zwei, mindestens drei, mindestens vier und mindestens fünf. "Mindestens ein" schließt auch eins, zwei, drei, vier, fünf, sechs, sieben, acht, neun und zehn ein.

Das erfindungsgemäße Feststoffgemisch umfasst vorzugsweise 35 bis 85 Gew%, noch mehr bevorzugt 40 bis 80 Gew%, noch mehr bevorzugt 40 bis 75 Gew%, noch mehr bevorzugt 40 bis 70 Gew%, des mindestens eines Zeoliths.

Das erfindungsgemäße Feststoffgemisch umfasst vorzugsweise 1 bis 25 Gew% des mindestens einen biologisch abbaubaren Oligosaccharids und/oder mindestens eines biologisch abbaubaren Polysaccharids.

Das erfindungsgemäße Feststoffgemisch umfasst vorzugsweise 5 bis 25 Gew% des mindestens einen Schichtsilikats.

Das erfindungsgemäße Feststoffgemisch umfasst vorzugsweise 0,001 bis 9 Gew%, noch mehr bevorzugt 0,001 bis 8 Gew%, des mindestens einen gegen Insekten wirksamen Wirkstoffs.

"Gew%", wie hier verwendet, bezieht sich auf das gesamte Feststoffgemisch, so dass dieses im gesamten nicht mehr als 100 Gew% der Inhaltsstoffe umfasst. D.h. das erfindungsgemäße Feststoffgemisch umfasst die oben angeführten Mengen an Inhaltsstoffen im entsprechenden Ausmaß um in Summe 100 Gew% zu erzielen.

Das erfindungsgemäß eingesetzte Zeolith kann natürlichen oder synthetischen Ursprungs, vorzugsweise natürlichen Ursprungs, sein. Aufgrund ihrer chemischen Eigenschaften und Struktur sind Zeolithe in der Lage u.a. gegen Insekten wirksame Wirkstoffe zu binden und verzögert freizusetzen. Die Bindung zwischen den unterschiedlichen Molekülen und der Zeolithoberfläche kann unter anderem durch elektrostatische Bindungen, Kationenbindung, Wasserstoffbrückenbindungen, hydrophile Absorption und Interaktionen mit porösen Oberflächen erfolgen. Es wird angenommen, dass diese Interaktionen je nach Art der beteiligten Moleküle in unterschiedlichen Formen auftreten können.

In Kombination mit mindestens einem biologisch abbaubaren Oligosaccharid und/oder mindestens einem biologisch abbaubaren Polysaccharid und mindestens einem Schichtsilikat ist es überraschenderweise möglich die Wirkstofffreisetzung noch mehr zu verzögern und konstanter zu gestalten.Gemäß einer bevorzugten Ausführungsform der vorliegenden Erfindung ist der mindestens ein Zeolith ausgewählt aus der Gruppe bestehend aus einem Zeolith der Strunz Klasse 9.GE ("Tafeln mit 4-4-1-1 Struktureinheiten") und der Strunz Klasse 9.GD ("Ketten von Fünfer-Ringen").

Die Mineralklassifikation nach Strunz ist eine in den Materialwissenschaften, insbesondere in der Mineralogie, definierte und etablierte Klassifikation und wird in allen Lehrbüchern entsprechend beschrieben (H. Strunz and E. H. Nickel, Strunz Mineralogical Tables, 2001, 9. Ausgabe, E. Schweizerbart'sche Verlagsbuchhandlung, Stuttgart).

Gemäß einer weiteren bevorzugten Ausführungsform der vorliegenden Erfindung ist der mindestens ein Zeolith ausgewählt aus der Gruppe bestehend aus einem Zeolith der Strunz Klasse 9.GE.05 (Heulandit-Typ-Zeolith), einem Zeolith der Strunz Klasse 9.GD.10 (Chabasit-Typ-Zeolith) und einem Zeolith der Strunz-Klasse 9.GD.35 (Mordenit-Typ-Zeolith).

Gemäß einer noch weiteren bevorzugten Ausführungsform der vorliegenden Erfindung ist der mindestens ein Zeolith ausgewählt aus der Gruppe bestehend aus Heulandit-Ca, Heulandit-K, Heulandit-Na, Heulandit-Sr, Klinoptilolith-Ca, Klinoptilolith-K und Klinoptilolith-Na, wobei Klinoptilolith besonders bevorzugt ist.

Gemäß einer bevorzugten Ausführungsform der vorliegenden Erfindung weist der mindestens ein Zeolith eine Partikelgröße D98 von weniger als 30 pm, vorzugsweise von 0,1 bis 25 pm, noch bevorzugter von 0,2 bis 20 pm, noch bevorzugter von 0,2 bis 15 µm, noch bevorzugter von 0,5 bis 12 µm, noch bevorzugter von 1 bis 10 µm, noch bevorzugter von 2 bis 8 µm, auf.

Es hat sich gezeigt, dass es von Vorteil sein kann, dass die eingesetzten Zeolithe eine bestimmte Größe aufweisen bzw. eine bestimmte Größe nicht überschreiten. Die Verwendung von Zeolithen mit einer Partikelgröße D98 von weniger als 30 µm hat den Vorteil, dass diese in der gebildeten Matrix fein verteilt werden können und zusätzlich eine große Oberfläche bieten, damit die gegen Insekten wirksamen Wirkstoffe effizient und ausreichender Menge daran binden können. Zudem können größere Partikel nicht gut versprüht werden, da diese die Sprühdosen verstopfen können.

"Partikelgröße", wie hier definiert, lässt sich anhand der Partikelgrößenverteilung bestimmen. Die Partikelgrößenverteilung kann mit einer Vielzahl von Techniken bestimmt werden. Für die Zwecke der vorliegenden Erfindung wird die Partikelgröße mit einem Laserbeugungssystem gemäß ISO 13320 bestimmt. Der D98-Wert wird aus der Partikelgrößenverteilung aus einer volumenbasierten Darstellung oder aus einer zahlenbasierten Darstellung ermittelt. In der vorliegenden Anwendung beziehen sich alle "dx"-Werte auf die volumenbasierte Darstellung, d.h. auf den Partikeldurchmesser bei "x" Vol.-% in der kumulativen Verteilung (z. B. bedeutet ein D98-Wert von 30 pm, dass 98 Vol.-% der Partikel einen kleineren Durchmesser als 30 µm haben). Der erfindungsgemäße D50-Wert ist als "mittlere Partikelgröße" zu verstehen und wird aus der Partikelgrößenverteilung bestimmt. Ein D50-Wert von 5 pm bedeutet z.B., dass 50 Vol.-% der Partikel einen kleineren Durchmesser als 5 µm haben. Die Partikelgrößenverteilung kann durch Laserbeugungsanalyse gemäß ISO 13320 oder CIPAC MT 187 bestimmt werden, z. B. mit dem Partikelgrößenanalysator CILAS 715. Insbesondere kann die Partikelgrößenverteilung von Partikeln mit einem Durchmesser von weniger als 30 µm durch Laserbeugungsanalyse nach ISO 13320 mit dem Partikelgrößenanalysator CILAS 715 gemessen werden.

Gemäß einer weiteren bevorzugten Ausführungsform der vorliegenden Erfindung weist der mindestens ein Zeolith eine Partikelgröße D50 von weniger als 5 pm, vorzugsweise von 0,1 bis 5 pm, mehr bevorzugt von 0,5 bis 5 µm, mehr bevorzugt von 1 bis 5 µm, mehr bevorzugt von 1 bis 4 µm, auf.

Gemäß einer besonders bevorzugten Ausführungsform der vorliegenden Erfindung weist das mindestens eine Schichtsilikat eine Partikelgröße D98 von weniger als 300 µm, vorzugsweise von weniger als 250 µm, noch bevorzugter von 0,1 bis 300 µm, noch bevorzugter von 0,1 bis 250 µm, noch bevorzugter von 0,2 bis 60 µm, auf.

Diese Partikelgrößen sind besonders geeignet, da diese die gleichmäßige Verteilung in der Feststoffmischung und auch in einer Suspension verbessern, wodurch u.a. eine Entmischung vermieden werden kann. Zudem können derartige Partikel auch mit Sprühgeräten ausgebracht werden, ohne die Düsen der Sprühgeräte zu verstopfen.

Gemäß einer bevorzugten Ausführungsform der vorliegenden Erfindung ist das mindestens eine Schichtsilikat ausgewählt ist aus der Gruppe bestehend aus einem Schichtsilikat nach der Strunz Systematik (9. Auflage) der Gruppe 9.EC ("Schichtsilikate (Phyllosilikate) mit Glimmertafeln, zusammengesetzt aus tetraedrischen und oktaedrischen Netzen").

Gemäß einer weiteren bevorzugten Ausführungsform der vorliegenden Erfindung ist das mindestens eine Schichtsilikat ausgewählt ist aus der Gruppe bestehend aus einem Schichtsilikat nach der Strunz Systematik (9. Auflage) der Gruppe 9.EC.40 (Montmorillonit-Gruppe) und einem Schichtsilikat der Gruppe 9.EC.45 (Saponit-Gruppe).

Die erfindungsgemäß eingesetzten Zeolithe und/oder Schichtsilikate können natürlichen oder künstlichen Ursprungs sein. Verfahren zur Gewinnung sowohl natürlicher als auch künstlicher Zeolithe und/oder Schichtsilikate sind der Fachperson hinreichend bekannt.

Gemäß einer bevorzugten Ausführungsform der vorliegenden Erfindung umfasst das mindestens eine biologisch abbaubare Oligosaccharid und/oder Polysaccharid mindestens eine Modifikation.

Das mindestens eine biologisch abbaubare Oligosaccharid bzw. Polysaccharid kann chemisch modifiziert sein. Verfahren zur chemischen Modifikation von Oligo- bzw. Polysacchariden sind der Fachperson hinreichend bekannt. Durch eine chemische Modifikation können Oligo- bzw. Polysaccharide eine verbesserte Stabilität oder Abbaubarkeit, eine bessere Löslichkeit, verbesserte rheologische Eigenschaften und/oder ein erhöhte Bindungsfähigkeit für gegen Insekten wirksame Wirkstoffe erlangen.

Gemäß einer besonders bevorzugten Ausführungsform der vorliegenden Erfindung ist die Modifikation ausgewählt aus der Gruppe bestehend aus Alkylierung, vorzugsweise Methylierung, Acetylierung, Sulfatierung und Phosphorylierung, wobei Methylierung besonders bevorzugt ist.

Gemäß einer weiteren bevorzugten Ausführungsform der vorliegenden Erfindung ist das mindestens eine biologisch abbaubare Oligosaccharid und/oder Polysaccharid ausgewählt aus der Gruppe bestehend aus Cyclodextrin, Chitosan, Alginsäure, Hyaluronsäure und Pullulan.

Oligosaccharide und/oder Polysaccharide, insbesondere Cyclodextrine, können die chemische Stabilität von Wirkstoffen (wie z.B. von Pheromonen) verbessern, indem sie sie vor biotischen Abbau, abiotischem Abbau durch Hitze, Licht und Oxidation schützen. Viele Pheromone sind schlecht wasserlöslich, was ihre Anwendung einschränken kann. Oligosaccharide und/oder Polysaccharide, insbesondere Cyclodextrine, können die Löslichkeit dieser Verbindungen in wässrigen Lösungen verbessern. Gemäß einer noch weiteren bevorzugten Ausführungsform der vorliegenden Erfindung ist das Cyclodextrin Alpha-Cyclodextrin, Beta-Cyclodextrin oder Gamma-Cyclodextrin, vorzugsweise Beta-Cyclodextrin.

Gemäß einer bevorzugten Ausführungsform der vorliegenden Erfindung ist der mindestens eine gegen Insekten wirksame Wirkstoff eine Semiochemikalie, ein Insektizid oder ein Repellent.

Die erfindungsgemäß eingesetzten Wirkstoffe können unterschiedlicher chemischer Natur sein und unterschiedliche Wirkungen gegenüber Insekten haben. Vorzugsweise ist der Wirkstoff jedoch eine Semiochemikalie, ein Insektizid oder ein Repellent, wobei Semiochemikalien besonders bevorzugt sind.

Gemäß einer weiteren bevorzugten Ausführungsform der vorliegenden Erfindung ist die Semiochemikalie auf Gliederfüßer, vorzugsweise auf Insecta, Arachnida und/oder Diplopoda, wirksam.

Gemäß einer bevorzugten Ausführungsform der vorliegenden Erfindung ist die Semiochemikalie auf Lepidoptera und Coleoptera wirksam.

Gemäß einer weiteren bevorzugten Ausführungsform der vorliegenden Erfindung ist die Semiochemikalie ein Pheromon, vorzugsweise ein Sexualpheromon.

Gemäß einer noch weiteren bevorzugten Ausführungsform der vorliegenden Erfindung ist das Sexualpheromon ausgewählt aus der Gruppe bestehend aus (Z)-9-Tetradecenylacetat, (Z)-11-Hexadecenylacetat,(Z)-7-Dodecenylacetat, (E)-7-Dodecenylacetat(Z)-11-Tetradecenylacetat, (E)-11-Tetradecenylacetat, (E)-8-Dodecenylacetat, (Z)-8-Dodecenylacetat, 8-Methyldecan-2-yl-Propionat, (E,E)-8,10-Dodecadien-1-ol und (E,Z)-7,9-Dodecadienylacetat,(Z)-9-Hexadecenal, (Z)-11-Hexadecenal, (Z)-13-Hexadecenal.

Die Herstellung der erfindungsgemäß verwendeten Wirkstoffe kann durch verschiedene Verfahren erfolgen. Diese Stoffe können synthetisch, biotechnologisch mittels Hefe oder durch eine Kombination beider Methoden produziert werden, was eine flexible Anpassung an spezifische Anforderungen und Skalierbarkeiten ermöglicht. Unabhängig von der Herstellungsmethode wird darauf geachtet, dass die Wirkstoffe in verschiedenen Formulierungen eingesetzt werden können. Sie sind sowohl als einzelne Wirkstoffe als auch in Mischungen ("Elends") mit anderen aktiven oder inaktiven Komponenten effektiv. Um eine optimale Wirksamkeit und Sicherheit zu gewährleisten, wird ein Reinheitsgrad von mindestens 50% angestrebt, wobei höhere Reinheitsgrade bevorzugt sind. Diese hohe Reinheit unterstützt nicht nur die Wirksamkeit und Verträglichkeit der Wirkstoffe, sondern auch die Konsistenz und Vorhersehbarkeit ihrer Effekte auf die Zielorganismen.

Gemäß einer weiteren Ausführungsform der vorliegenden Erfindung umfassen die Wirkstoffe, die gegen Insekten eingesetzt werden können, nicht nur natürlich vorkommende Insektizide und Repellents, sondern auch synthetisch hergestellte oder durch andere technologische Verfahren entwickelte Verbindungen. Diese können aus einer breiten Palette von chemischen Verbindungen bestehen, die effektiv zur Bekämpfung oder Abwehr von Insekten eingesetzt werden können. Vorzugsweise umfasst die Palette der Wirkstoffe neben den bereits genannten natürlichen Optionen wie Pyrethrine, Neemöl, Orangenöl und Zimtöl auch synthetische Analoga und neu entwickelte Moleküle, die spezifische Wirkmechanismen gegen Insekten aufweisen.

Die erfindungsgemäßen Wirkstoffe können daher sowohl durch biotechnologische als auch chemisch-synthetische Prozesse hergestellt werden. Die Wahl der Herstellungsmethode kann auf der Grundlage von Kosten-Nutzen-Analysen, Umweltverträglichkeit, Verfügbarkeit der Rohstoffe und regulatorischen Anforderungen getroffen werden. Die Möglichkeit biologische Wirkstoffe zu verwenden, bleibt bestehen, bietet jedoch zusätzliche Flexibilität, um den sich ändernden Marktbedingungen und technologischen Entwicklungen gerecht zu werden.

Gemäß einer noch weiteren bevorzugten Ausführungsform der vorliegenden Erfindung weist das Feststoffgemisch die Form eines Pulvers, eines Granulats oder einer Kombination davon auf.

Das Feststoffgemisch kann in verschiedenen Formen vorliegen, wobei Pulver, Granulate oder einer Kombination davon besonders bevorzugt sind. Das erfindungsgemäße Feststoffgemisch kann verschiedene Teilchen in unterschiedlichen Größen und Formen enthalten. Pulver sind feine Partikel, die lose miteinander verbunden sind und eine hohe Oberfläche zur Verfügung stellen. Granulate hingegen bestehen aus gröberen Teilchen, die fester miteinander verbunden sind. Die Kombination beider Formen ermöglicht eine optimale Mischungseigenschaften und Anwendbarkeit des Materials.

Gemäß einer bevorzugten Ausführungsform der vorliegenden Erfindung weist die Zusammensetzung einen Wassergehalt von weniger als 20 Gew%, vorzugsweise von weniger als 15 Gew%, noch mehr bevorzugt von weniger als 10 Gew%, noch mehr bevorzugt von weniger als 8 Gew%, noch mehr bevorzugt von weniger als 5 Gew%, noch mehr bevorzugt von weniger als 4 Gew%, noch mehr bevorzugt von weniger als 3 Gew%, noch mehr bevorzugt von weniger als 2 Gew%, noch mehr bevorzugt von weniger als 1 Gew%, auf.

Das erfindungsgemäße Feststoffgemisch weist vorzugsweise so wenig Wasser wie möglich auf, um eine gute Haltbarkeit des Gemisches zu gewähren und eine Verklumpung der einzelnen Bestandteile zu reduzieren oder gar zu unterbinden.

Ein weiterer Aspekt der vorliegenden Erfindung betrifft einen Kit umfassend
a) ein Behältnis umfassend mindestens ein Zeolith wie oben definiert,
b) ein Behältnis umfassend mindestens ein biologisch abbaubares Oligosaccharid und/oder Polysaccharid wie oben definiert,
c) ein Behältnis umfassend mindestens ein Schichtsilikat wie oben definiert, und
d) ein Behältnis umfassend mindestens einen gegen Insekten wirksamen Wirkstoff wie oben definiert.

Die Bestandteile des erfindungsgemäßen Feststoffgemisches können auch getrennt voneinander Teil eines Kits sein. In diesem Fall umfasst der Kit mehrere Behältnisse, in denen sich jeweils eine Komponente des erfindungsgemäßen Feststoffgemisches befinden. Dies ist insbesondere von Vorteil, da es dem Anwender die Möglichkeit gibt, die Gewichtsverhältnisse im Rahmen des erfindungsgemäßen Feststoffgemisches zu variieren. Durch die Variation der Gewichtsverhältnisse der einzelnen Komponenten ist es möglich u.a. die Freisetzungsrate des Wirkstoffs aber auch die insgesamt freizugebende Wirkstoffmenge zu beeinflussen. Je nach Wirkstoff oder Wirkstoffkombination wird mehr oder weniger des oder der Wirkstoffe benötigt.

Ein noch weiterer Aspekt der vorliegenden Erfindung betrifft eine Suspension umfassend ein erfindungsgemäßes Feststoffgemisch und Wasser.

Das erfindungsgemäße Feststoffgemisch wird vor dessen Verwendung als Pflanzenschutzmittel, beispielsweise, in Wasser oder einer wässrigen Lösung und/oder einem organischen Lösungsmittel suspendiert. Die gebildete Suspension wird anschließend auf die Pflanzen oder Pflanzenteile aufgebracht.

Die erfindungsgemäße Suspension kann zusätzlich Additive enthalten, welche in der Lage sind, bestimmte Eigenschaften des Produkts zu verbessern, wie z.B. Haftung, Verteilung, Benetzung und andere Eigenschaften, die insbesondere beim Auftragen der Suspension auf Pflanzen oder Pflanzenteilen, vorteilhaft sind. Netz- und Haftmittel sind besonders bevorzugte Additive, die eine noch bessere Benetzung und Haftung an den Zieloberflächen der Pflanzen ermöglichen.

Gemäß einer bevorzugten Ausführungsform der vorliegenden Erfindung beträgt das Gewichtsverhältnis zwischen dem Feststoffgemisch und dem Wasser 1:1 bis 1:500, vorzugsweise 1:1 bis 1:400, noch mehr bevorzugt 1:1 bis 1:300, noch mehr bevorzugt 1:1 bis 1:250, noch mehr bevorzugt 1:1 bis 1:200, noch mehr bevorzugt 1:1 bis 1:150, noch mehr bevorzugt 1:1 bis 1:100.

Das geeignete Verhältnis Feststoffgemisch zu Wasser kann von der Einsatzart abhängen. Beispielsweise kann dieses Verhältnis zwischen 1:5 und 1:10 beim Einsatz in Drohnen und Flugzeugen, zwischen 1:20 und 1:50 beim Einsatz in Reihenkulturen, zwischen 1:100 und 1:500 im Wein- und Obstbau betragen.

Es hat sich gezeigt, dass eine Suspension, bei der das Gewichtsverhältnis zwischen dem Feststoffgemisch und dem Wasser 1:1 bis 1:500 beträgt, besonders gut geeignet ist des erfindungsgemäßen Feststoffgemisches herzustellen.

Ein weiterer Aspekt der vorliegenden Erfindung betrifft ein Verfahren zum Behandeln von Pflanzen oder Pflanzenteilen umfassend die Schritte:
a) Vermischen eines erfindungsgemäßen Feststoffgemisches mit Wasser im Gewichtsverhältnis 1:1 bis 1:500, vorzugsweise 1:1 bis 1:400, noch mehr bevorzugt 1:1 bis 1:300, noch mehr bevorzugt 1:1 bis 1:250, noch mehr bevorzugt 1:1 bis 1:200, noch mehr bevorzugt 1:1 bis 1:150, noch mehr bevorzugt 1:1 bis 1:100, zur Herstellung einer wässrigen Suspension, und
b) Aufbringen der wässrigen Suspension aus Schritt a) auf eine Pflanze oder einem Pflanzenteil.

Die wässrige Suspension, die zur Behandlung von Pflanzen oder Pflanzenteilen eingesetzt wird, kann auch organische Lösungsmittel wie oben ausgeführt umfassen.

In Schritt a) des erfindungsgemäßen Verfahrens können auch Additive, wie oben beschrieben, hinzugefügt werden. Entsprechende Additive werden vorzugsweise in bekannten Mengen hinzugefügt. Es ist vorteilhaft Additive vor dem Ausbringen des erfindungsgemäßen Feststoffgemisches mit demselbigen zu vermischen, um die Eigenschaften der Suspension situationsbedingt und/oder anwendungsspezifisch zu beeinflussen.

Gemäß einer bevorzugten Ausführungsform der vorliegenden Erfindung wird 1 bis 1000 Liter pro Hektar der wässrigen Suspension ausgebracht.

Gemäß einer weiteren bevorzugten Ausführungsform der vorliegenden Erfindung wird die wässrige Suspension auf die Pflanzen oder dem Pflanzenteil durch Sprühen, vorzugsweise mit einer Drohne, aufgebracht.

Verfahren zum Aus- und Aufbringen der erfindungsgemäßen wässrigen Suspension sind der Fachperson hinreichend bekannt.

Die vorliegende Erfindung wird anhand der folgenden Ausführungsformen und Beispiele näher illustriert, ohne jedoch auf diese beschränkt zu sein.

### AUS FÜHRUNGS FORMEN

1. Feststoffgemisch umfassend
   - 30 bis 90 Gew% mindestens eines Zeoliths,
   - 1 bis 30 Gew% mindestens eines biologisch abbaubaren Oligosaccharids und/oder mindestens eines biologisch abbaubaren Polysaccharids,
   - 5 bis 30 Gew% mindestens eines Schichtsilikats, und
   - 0,001 bis 10 Gew% mindestens eines gegen Insekten wirksamen Wirkstoffs.
2. Feststoffgemisch nach Ausführungsform 1, dadurch gekennzeichnet, dass der mindestens eine Zeolith ausgewählt ist aus der Gruppe bestehend aus einem Zeolith der Strunz Klasse 9.GE und der Strunz Klasse 9.GD.
3. Feststoffgemisch nach Ausführungsform 1 oder 2, dadurch gekennzeichnet, dass der mindestens eine Zeolith ausgewählt ist aus der Gruppe bestehend aus einem Zeolith der Strunz Klasse 9.GE.05 (Heulandit-Typ-Zeolith), einem Zeolith der Strunz Klasse 9.GD.10 (Chabasit-Typ-Zeolith) und einem Zeolith der Strunz-Klasse 9.GD.35 (Mordenit-Typ-Zeolith).
4. Feststoffgemisch nach einem der Ausführungsformen 1 bis 3, dadurch gekennzeichnet, dass der mindestens eine Zeolith ausgewählt ist aus der Gruppe bestehend aus Heulandit-Ca, Heulandit-K, Heulandit-Na, Heulandit-Sr, Klinoptilolith-Ca, Klinoptilolith-K und Klinoptilolith-Na.
5. Feststoffgemisch nach einem der Ausführungsformen 1 bis 4, dadurch gekennzeichnet, dass der mindestens ein Zeolith eine Partikelgröße D98 von weniger als 30 pm, vorzugsweise von 0,1 bis 25 pm, noch bevorzugter von 0,2 bis 20 pm, noch bevorzugter von 0,2 bis 15 pm, noch bevorzugter von 0,5 bis 12 pm, noch bevorzugter von 1 bis 10 pm, noch bevorzugter von 2 bis 8 pm, aufweist.
6. Feststoffgemisch nach einem der Ausführungsformen 1 bis 4, dadurch gekennzeichnet, dass der mindestens ein Zeolith eine Partikelgröße D50 von weniger als 5 pm, vorzugsweise von 0,1 bis 5 pm, mehr bevorzugt von 0,5 bis 5 pm, mehr bevorzugt von 1 bis 5 pm, mehr bevorzugt von 1 bis 4 pm, aufweist.
7. Feststoffgemisch nach einem der Ausführungsformen 1 bis 6, dadurch gekennzeichnet, dass das mindestens eine Schichtsilikat eine Partikelgröße D98 von weniger als 300 pm, vorzugsweise von weniger als 250 pm, noch bevorzugter von 0,1 bis 300 pm, noch bevorzugter von 0,1 bis 250 pm, noch bevorzugter von 0,2 bis 60 µm, aufweist.
8. Feststoffgemisch nach einem der Ausführungsformen 1 bis 7, dadurch gekennzeichnet, dass das mindestens eine Schichtsilikat ausgewählt ist aus der Gruppe bestehend aus einem Schichtsilikat der Strunz Gruppe 9.EC.
9. Feststoffgemisch nach Ausführungsform 8, dadurch gekennzeichnet, dass das mindestens eine Schichtsilikat ausgewählt ist aus der Gruppe bestehend aus einem Schichtsilikat der Strunz Klasse 9.EC.40 (Montmorillonite-Gruppe) und einem Schichtsilikat der Strunz Gruppe 9.EC.45 (Saponit-Gruppe).
10. Feststoffgemisch nach einem der Ausführungsformen 1 bis 9, dadurch gekennzeichnet, dass das mindestens eine biologisch abbaubare Oligosaccharid und/oder Polysaccharid mindestens eine Modifikation umfasst.
11. Feststoffgemisch nach Ausführungsform 10, dadurch gekennzeichnet, dass die Modifikation ausgewählt ist aus der Gruppe bestehend aus Alkylierung, vorzugsweise Methylierung, Acetylierung, Sulfatierung und Phosphorylierung.
12. Feststoffgemisch nach einem der Ausführungsformen 1 bis 11, dadurch gekennzeichnet, dass mindestens eine biologisch abbaubare Oligosaccharid und/oder Polysaccharid ausgewählt ist aus der Gruppe bestehend aus Cyclodextrin, Chitosan, Alginsäure, Hyaluronsäure und Pullulan.
13. Feststoffgemisch nach Ausführungsform 12, dadurch gekennzeichnet, dass das Cyclodextrin Alpha-Cyclodextrin, Beta-Cyclodextrin oder Gamma-Cyclodextrin, vorzugsweise Beta-Cyclodextrin, ist.
14. Feststoffgemisch nach einem der Ausführungsformen 1 bis 13, dadurch gekennzeichnet, dass der mindestens eine gegen Insekten wirksame Wirkstoff eine Semiochemikalie, ein Insektizid oder ein Repellent ist.
15. Feststoffgemisch nach Ausführungsform 14, dadurch gekennzeichnet, dass die Semiochemikalie auf Gliederfüßer, vorzugsweise auf Insecta, Arachnida und/oder Diplopoda, wirksam ist.
16. Feststoffgemisch nach Ausführungsform 14 oder 15, dadurch gekennzeichnet, dass die Semiochemikalie auf Lepidoptera und Coleoptera wirksam ist.
17. Feststoffgemisch nach einem der Ausführungsformen 14 bis 16, dadurch gekennzeichnet, dass die Semiochemikalie ein Pheromon, vorzugsweise ein Sexualpheromon, ist.
18. Feststoffgemisch nach Ausführungsform 17, dadurch gekennzeichnet, dass das Sexualpheromon ausgewählt ist aus der Gruppe bestehend aus (Z)-9-Tetradecenylacetat, (Z)-11-Hexadecenylacetat, (Z)-11-Tetradecenylacetat, (Z)-7-Dodecenylacetat, (E)-7-Dodecenylacetat, (E)-11-Tetradecenylacetat, (E)-8-Dodecenylacetat, (Z)-8-Dodecenylacetat, 8-Methyldecan-2-yl-Propionat, (E,E)-8,10-Dodecadien-1-ol und (E,Z)-7,9-Dodecadienylacetat,(Z)-9-Hexadecenal, (Z)-11-Hexadecenal, (Z)-13-Hexadecenal.
19. Feststoffgemisch nach einem der Ausführungsformen 14 bis 18, dadurch gekennzeichnet, dass das Insektizid ein synthetisches oder natürlich vorkommendes Insektizid ist, vorzugsweise ausgewählt aus der Gruppe bestehend aus Pyrethrine, Neemöl, Orangenöl und Zimtöl.
20. Feststoffgemisch nach einem der Ausführungsformen 13 bis 19, dadurch gekennzeichnet, dass das Repellent ein Insektenrepellent ist.
21. Feststoffgemisch nach einem der Ausführungsformen 1 bis 20, dadurch gekennzeichnet, dass das Feststoffgemisch die Form eines Pulvers, eines Granulats oder einer Kombination davon aufweist.
22. Kit umfassend
   a) ein Behältnis umfassend mindestens ein Zeolith wie in einem der Ausführungsformen 2 bis 6 definiert,
   b) ein Behältnis umfassend mindestens ein biologisch abbaubares Oligosaccharid und/oder Polysaccharid wie in einem der Ausführungsformen 10 bis 13 definiert,
   c) ein Behältnis umfassend mindestens ein Schichtsilikat wie in einem der Ausführungsformen 7 bis 9 definiert, und
   d) ein Behältnis umfassend mindestens einen gegen Insekten wirksamen Wirkstoff wie in einem der Ausführungsformen 14 bis 20 definiert.
23. Suspension umfassend ein Feststoffgemisch nach einem der Ausführungsformen 1 bis 21 und Wasser.
24. Suspension nach Ausführungsform 23, dadurch gekennzeichnet, dass das Gewichtsverhältnis zwischen dem Feststoffgemisch und dem Wasser und/oder dem organischen Lösungsmittel 1:1 bis 1:500 beträgt, vorzugsweise 1:1 bis 1:400, noch mehr bevorzugt 1:1 bis 1:300, noch mehr bevorzugt 1:1 bis 1:250, noch mehr bevorzugt 1:1 bis 1:200, noch mehr bevorzugt 1:1 bis 1:150, noch mehr bevorzugt 1:1 bis 1:100.
25. Verfahren zum Behandeln von Pflanzen oder Pflanzenteilen umfassend die Schritte:
   a) Vermischen eines Feststoffgemisches nach einem der Ausführungsformen 1 bis 21 mit Wasser im Gewichtsverhältnis 1:1 bis 1:500 zur Herstellung einer wässrigen Suspension, und
   b) Aufbringen der wässrigen Suspension aus Schritt a) auf eine Pflanze oder einem Pflanzenteil.
26. Verfahren nach Ausführungsform 25, dadurch gekennzeichnet, dass 1 bis 1000 Liter pro Hektar der wässrigen Suspension ausgebracht wird.
27. Verfahren nach Ausführungsform 25 oder 26, dadurch gekennzeichnet, dass die wässrige Suspension auf die Pflanzen oder dem Pflanzenteil durch Sprühen, vorzugsweise mit einer Drohne, aufgebracht wird.

### BEISPIELE

### BEISPIEL 1:

### Einfluss von Verwendung von Zeolithen als Hauptkomponente in Zusammensetzung auf die langfristige Freisetzungsgeschwindigkeit von Wirkstoffen nach der Applikation.

In diesem Experiment wurden zwei Formulierungen mit verschiedenen natürlichen Kernträger verglichen:
Die "Zusammensetzung 1" basierte auf dem Kernträger "LNZ" aus der Gruppe der Zeolithe. Sie enthielt 95 Gewichtsprozent fein vermahlener natürlicher Zeolith (>50 % Klinoptilolithgehalt) mit einem d98-Wert von weniger als 10 pm, kombiniert mit 5 Gewichtsprozent (Z)-11-Tetradecenylacetat (einen Wirkstoff aus der Gruppe der Sexualpheromone).

Die "Zusammensetzung 2" basierte auf dem Kernträger "Bent" aus der Gruppe Schichtsilikate. Sie enthielt 95% vom Gewicht an fein vermahlenen natürlicher Bentonite (>80% Montmorillonite) mit einem d98-Wert von weniger als 55pm, kombiniert mit 5 Gewichtsprozent (Z)-11-Tetradecenylacetat (einen Wirkstoff aus der Gruppe der Sexualpheromone).

Auf Basis dieser Zusammensetzungen wurden wässrige Suspensionen hergestellt, wobei ein Verhältnis von 1:50 von Feststoffgemisch zu Wasser verwendet wurde. Diese Suspensionen wurden anschließend mit einem Sprühgerät auf die inerte Oberfläche aufgetragen. Die Proben wurden gemäß den vorgesehenen Methoden entnommen und analysiert.

Mit Hilfe von GC/MS wurde der Restgehalt des Wirkstoffs nach der Anwendung an bestimmten Tagen gemessen und als Prozentsatz der Ausgangskonzentration (100%) angegeben (siehe Fig. 2).

**Tabelle 1: Einfluss von Kernträger auf die Wirkstoffretention nach der Anwendung. Gehalt an Wirkstoff nach der Anwendung im Vergleich zu Anfangsmenge [Gew.-%]**

| | Tag 0 | Tag 1 | Tag 4 | Tag 7 |
|---|---|---|---|---|
| "Zusammensetzung 1" | 80,6 | 58,3 | 35,4 | 25,5 |
| "Zusammensetzung 2" | 74,6 | 51,2 | 20,2 | 4,4 |

### BEISPIEL 2:

### Einfluss der Verwendung von Schichtsilikaten bzw. biologisch abbaubaren Polysacchariden auf die kurzfristige Freisetzungsgeschwindigkeit von Wirkstoffen nach der Applikation.

Die "Zusammensetzung 3" basierte auf dem Kernträger "LNZ" aus der Gruppe der Zeolithe. Sie enthielt 99 Gewichtsprozent fein vermahlener natürlicher Zeolithe (>80 % Klinoptilolithgehalt) mit einem d98-Wert von weniger als 10 pm, kombiniert mit 1 Gewichtsprozent 8-Methyldecan-2-yl-Propionat (einen Wirkstoff aus der Gruppe der Sexualpheromone).

In diesem Beispiel wurde der Einfluss von zusätzlichen Additiven auf "Zusammensetzung 3" und den Verlust des Wirkstoffs während des Applikationsprozesses, der die Wirksamkeit der erfindungsgemäßen Zusammensetzung beeinträchtigt, analysiert.

In diesem Versuch wurde Additiv 1 aus der Saponitgruppe (CAS 12173-47-6) mit einem d98-Wert von weniger als 200 pm und Additiv 2 aus der Gruppe der biologisch abbaubaren Polysaccharide (CAS 7585-39-9) in unterschiedlichen Anteilen zur Zusammensetzung 3 hinzugefügt.

Das Hauptziel bestand darin, den Wirkstoffverlust während des Applikationsprozesses durch den Einsatz von zusätzlichen Bestandteilen, um mindestens 50 % zu verringern.

Auf der Basis dieser Zusammensetzungen 3-9 wurden wässrige Suspensionen hergestellt, wobei ein Verhältnis von 1:50 von Produkt zu Wasser verwendet wurde. Diese Suspensionen wurden anschließend mit einem Sprühgerät auf die inerte Oberfläche aufgetragen. Die Proben wurden gemäß den vorgesehenen Methoden entnommen und analysiert.

Mit Hilfe von GC/MS wurde der Restgehalt des Wirkstoffs nach der Anwendung an bestimmten Tagen gemessen und als Prozentsatz der Ausgangskonzentration (100%) angegeben.

Es wurde überraschenderweise festgestellt, dass die Zugabe von Additiv 1 die verbleibende Menge des Wirkstoffs nach der Applikation um 28 % (19 %) erhöhte. Weitere Untersuchungen bei Zugabe von Additiv 2 aus der Gruppe der biologisch abbaubaren Polysaccharide ergaben, dass diese die verbleibende Wirkstoffmenge ebenfalls um 35 % (26 %) im Vergleich zur Zusammensetzung 3 erhöhen können (siehe Tabelle 2).

**Tabelle 2: Einfluss von Additiv 1 und Additiv 2 auf die kurzfristige Wirkstoffretention in Zusammensetzungen 3-9 nach der Anwendung [Gew.-%].**

| Zusammensetzungen | Additiv 1 [Gew%] | Additiv 2 [Gew%] | Gehalt an Wirkstoff nach der Applikation im Vergleich zu Anfangsmenge [Gew.-%] |
|---|---|---|---|
| Zusammensetzung_3 | 0 | 0 | 9,1 |
| Zusammensetzung_4 | 0 | 2 | 27,7 |
| Zusammensetzung_5 | 0 | 4 | 35,3 |
| Zusammensetzung_6 | 5 | 0 | 22,3 |
| Zusammensetzung_7 | 10 | 0 | 26,3 |
| Zusammensetzung_8 | 15 | 0 | 27,9 |
| Zusammensetzung_9 | 20 | 0 | 21,5 |

### BEISPIEL 3:

### Synergistischer Einfluss der Kombination von Schichtsilikaten und biologisch abbaubaren Polysacchariden auf die kurzfristige Freisetzungsgeschwindigkeit von Wirkstoffen nach der Applikation.

Die "Zusammensetzung_3" basierte auf dem Kernträger "LNZ" aus der Gruppe der Zeolithe. "Zusammensetzung_3" enthält 99 Gewichtsprozent fein vermahlener natürlicher Zeolith (>50 % Klinoptilolithgehalt) mit einem d98-Wert von weniger als 10 pm, kombiniert mit 1 Gewichtsprozent 8-Methyldecan-2-yl-Propionat (einen Wirkstoff aus der Gruppe der Sexualpheromone);

In diesem Beispiel wurde der synergistische Effekt der Kombination zusätzlicher Additive 1 und 2 auf "Zusammensetzung_3" und der Verlust des Wirkstoffs während des Applikationsprozesses analysiert.

Additiv 1 aus der Saponitgruppe mit CAS 12173-47-6 mit einem d98-Wert von weniger als 200 pm wurde in unterschiedlichen Anteilen mit Additiv 2 aus der Gruppe der biologisch abbaubaren Polysaccharide mit CAS 7585-39-9 kombiniert und zur Zusammensetzung 3 hinzugefügt.

Auf der Basis dieser neuen Zusammensetzungen 10-17 wurden wässrige Suspensionen hergestellt, wobei ein Verhältnis von 1:50 von Produkt zu Wasser verwendet wurde. Diese Suspensionen wurden anschließend mit einem Sprühgerät auf die inerte Oberfläche aufgetragen. Die Proben wurden gemäß den vorgesehenen Methoden entnommen und analysiert.

Mit Hilfe von GC/MS wurde der Restgehalt des Wirkstoffs nach der Anwendung an bestimmten Tagen gemessen und als Prozentsatz der Ausgangskonzentration (100%) angegeben.

Anschließend wurden die synergistischen Effekte zwischen den Additiven 1 und 2 mit der Zusammensetzung_3 untersucht. Dabei überaschenderweise wurde festgestellt, dass eine Kombination der identifizierten Additive die verbleibende Menge des Wirkstoffs nach der Anwendung auf bis zu 80 % erhöhen kann (siehe Tabelle 3).

**Tabelle 3: Synergistischer Einfluss von Additiv 1 und Additiv 2 auf die kurzfristige Wirkstoffrückhaltung in der Zusammensetzungen 3, 10-17 nach der Anwendung [Gew.-%].**

| Zusammensetzungen | Additiv 1 [Gew%] | Additiv 2 [Gew%] | Gehalt an Wirkstoff nach der Applikation im Vergleich zu Anfangsmenge [Gew.-%] |
|---|---|---|---|
| Zusammensetzung_3 | 0 | 0 | 9,1 |
| Zusammensetzung_10 | 5 | 2 | 41,4 |
| Zusammensetzung_11 | 5 | 4 | 41,6 |
| Zusammensetzung_12 | 10 | 2 | 531 |
| Zusammensetzung_13 | 10 | 4 | 51,5 |
| Zusammensetzung_14 | 15 | 2 | 79,6 |
| Zusammensetzung_15 | 15 | 4 | 61,9 |
| Zusammensetzung_16 | 20 | 2 | 65,7 |
| Zusammensetzung_17 | 20 | 4 | 58,6 |

### BEISPIEL 4:

### Synergistischer Einfluss der Kombination von Schichtsilikaten und biologisch abbaubaren Polysacchariden auf die langfristige Freisetzung von Wirkstoffen nach der Applikation.

Das nächste Experiment wurde durchgeführt, um den Langzeit-Retentionseffekt des Wirkstoffs, verursacht durch die synergistische Kombination von Additiv 1 und 2, zu untersuchen und zu bestätigen. Für diesen Versuch wurde ein Vergleich zwischen der "Zusammensetzung_3" und der "Zusammensetzung_14" durchgeführt.

Zu diesem Zweck wurde jeweils für jede Zusammensetzung eine wässrige Suspension hergestellt, wobei ein Verhältnis von 1:50 von Produkt zu Wasser verwendet wurde. Diese Suspensionen wurden anschließend mit einem Sprühgerät auf die inerte Oberfläche aufgetragen. Die Proben wurden gemäß den vorgesehenen Methoden entnommen und mittels GC/MS auf das restliche Wirkstoffmengen analysiert.

Die erhaltenen Daten zeigen überraschenderweise eine bessere Retention von Wirkstoffen bei Verwendung der synergistischen Interaktion von Additiven 1 und 2. Dabei wurde festgestellt, dass eine Kombination der identifizierten Additive einen synergistischen Effekt hat und die langsame Freisetzung des Wirkstoffs nach der Anwendung im Vergleich zu einer Zusammensetzung ohne diese Additive gewährleisten kann (siehe Tabelle 4).

**Tabelle 4: Gehalt an Wirkstoff nach der Applikation im Vergleich zur Anfangskonzentration nach 56 Tagen in [Gew. %] (siehe Fig. 3)**

| Zeit nach Applikation | Gehalt an Wirkstoff nach der Applikation im Vergleich zu Anfangsmenge [Gew.%] | |
|---|---|---|
| | Zusammensetzung_3 | Zusammensetzung_14 |
| vor Applikation | 100 | 100 |
| Tag 0 | 10,0 | 79,6 |
| Tag 3 | 0,7 | 61,3 |
| Tag 7 | 0,0 | 40,8 |
| Tag 14 | 0,0 | 35,5 |
| Tag 21 | 0,0 | 16,2 |
| Tag 28 | 0,0 | 26,3 |
| Tag 35 | 0,0 | 18,8 |
| Tag 42 | 0,0 | 19,3 |
| Tag 49 | 0,0 | 5,6 |
| Tag 56 | 0,0 | 4,3 |

### BEISPIEL 5:

### Einfluss der Verwendung von biologisch abbaubaren Polysacchariden bzw. modifizierten biologisch abbaubaren Polysacchariden auf die kurzfristige Freisetzungsgeschwindigkeit von Wirkstoffen nach der Applikation.

Die "Zusammensetzung_3" basiert auf dem Kernträger "LNZ" aus der Gruppe der Zeolithe. "Zusammensetzung_3" enthält 99 Gewichtsprozent fein vermahlener natürlicher Zeolith (>80 % Klinoptilolithgehalt) mit einem d98-Wert von weniger als 10 pm, kombiniert mit 1 Gewichtsprozent 8-Methyldecan-2-yl-Propionat (einen Wirkstoff aus der Gruppe der Sexualpheromone);

In diesem Beispiel wurde der positive Einfluss von biologisch abbaubaren Polysacchariden bzw. modifizierten biologisch abbaubaren Polysacchariden und deren synergistische Effekte in Kombination mit Schichtsilikaten auf den Verlust des Wirkstoffs während des Applikationsprozesses analysiert.

Es wurden Zusammensetzungen 18-25 mit 2 Gew% von unterschiedlichen biologisch abbaubaren Polysacchariden bzw. modifizierten biologisch abbaubaren Polysacchariden hergestellt.

Auf der Basis dieser neuen Zusammensetzungen 03, 05, 18-25 wurden wässrige Suspensionen hergestellt, wobei ein Verhältnis von 1:50 von Produkt zu Wasser verwendet wurde. Diese Suspensionen wurden anschließend mit einer geeigneten Methode auf die inerte Oberfläche aufgetragen. Die Proben wurden gemäß den vorgesehenen Methoden entnommen und analysiert.

Mit Hilfe von GC/MS wurde der Restgehalt des Wirkstoffs nach der Anwendung gemessen und als Prozentsatz der Ausgangskonzentration (100%) angegeben.

**Tabelle 5: Einfluss von biologisch abbaubaren Polysacchariden bzw. modifizierten biologisch abbaubaren Polysacchariden auf die kurzfristige Freisetzungsgeschwindigkeit von Wirkstoffen nach der Applikation in Gewichts-prozent zur Anfangsmenge.**

| | Zusätzliche Additive (2 Gew %) mit | Gehalt an Wirkstoff nach der Applikation im Vergleich zu Anfangsmenge [Gew.-%] |
|---|---|---|
| Zusammensetzung_03 | Keine | 9,1 |
| Zusammensetzung_05 | CAS 7585-39-9 | 27,3 |
| Zusammensetzung_18 | Me Modifikation - MDL MFCD00074980 | 23,3 |
| Zusammensetzung_19 | Ac Modifikation - MDL MFCD03452810 | 3,7 |
| Zusammensetzung_20 | Na Modifikation - MDL MFCD00285608 | 4,6 |
| Zusammensetzung_21 | OH Modifikation - MDL MFCD00069372 | 9,0 |
| Zusammensetzung_22 | R3N Modifikation - MDL MFCD00078139 | 11,5 |
| Zusammensetzung_23 | SO3 Modifikation / CAS 182410-00-0 | 5,9 |
| Zusammensetzung_24 | Polymer Modifikation / MDL MFCD03456204 | 7,4 |
| Zusammensetzung_25 | Soluble carboxymethyl-βcyclodextrin polymer | 8,1 |

Anschließend wurden die synergistischen Effekte zwischen vorgeschlagenen Polysacchariden und Schichtsilikaten untersucht. Additiv 3 aus der Saponitgruppe mit eine Chemische Formel: (Ca,Na)_{0.3}(Mg,Fe)₃(Si,Al)₄O₁₀(OH)₂·4H₂O mit einem d98-Wert von weniger als 500 pm wurde in einen Anteil von 20 Gew.% zu jeweilige Zusammensetzungen 05, 18-25 hinzugefügt. Daraus haben sich Zusammensetzungen 26-34 ergeben.

Es wurde überaschenderweise festgestellt, dass eine Kombination der identifizierten Additive einen synergistischen Effekt hat und die verbleibende Menge des Wirkstoffs nach der Anwendung auf bis zu 70 % erhöht konnte (siehe Tabelle 6).

**Tabelle 6: Synergistischer Einfluss von Additiv 3 und biologisch abbaubaren Polysacchariden bzw. modifizierten biologisch abbaubaren Polysacchariden auf die kurzfristige Freisetzungsgeschwindigkeit von Wirkstoffen nach der Applikation in Gewichtsprozent zur Anfangsmenge.**

| | Zusätzliche Menge von Additiv 3 zu bereits erstellten Zusammensetzungen in [Gew.%] | Gehalt an Wirkstoff nach der Applikation im Vergleich zu Anfangsmenge [Gew. %] |
|---|---|---|
| Zusammensetzung_03 | Keine | 9,1 |
| Zusammensetzung_26 | Zusammensetzung_05 + 20 [Gew.%] | 35,5 |
| Zusammensetzung_27 | Zusammensetzung_18 + 20 [Gew.%] | 69,7 |
| Zusammensetzung_28 | Zusammensetzung_19 + 20 [Gew.%] | 17,1 |
| Zusammensetzung_29 | Zusammensetzung_20 + 20 [Gew.%] | 11,5 |
| Zusammensetzung_30 | Zusammensetzung_21 + 20 [Gew.%] | 58,0 |
| Zusammensetzung_31 | Zusammensetzung_22 + 20 [Gew.%] | 53,1 |
| Zusammensetzung_32 | Zusammensetzung_23 + 20 [Gew.%] | 13,7 |
| Zusammensetzung_33 | Zusammensetzung_24 + 20 [Gew.%] | 38,2 |
| Zusammensetzung_34 | Zusammensetzung_25 + 20 [Gew.%] | 36,5 |

### BEISPIEL 6

### Einfluss von Verwendung von Zeolithen als Hauptkomponente in Zusammensetzung auf die langfristige Freisetzungsgeschwindigkeit von Wirkstoffen nach der Applikation.

In diesem Experiment wurden einige Formulierungen mit verschiedenen potenziellen Wirkstoffträgern verglichen:
Die "Zusammensetzung 35" basierte auf dem Kernträger "LNZ" aus der Gruppe der Zeolithe. Sie enthält 95 Gewichtsprozent fein vermahlener natürlicher Zeolith (>90 % Klinoptilolithgehalt), kombiniert mit 5 Gewichtsprozent mit im bestimmten Pflanzen vorkommenden Substanz mit der CAS-Nummer 89-82-7 kombiniert. Diese Substanz wird aufgrund ihrer Eigenschaften zunehmend als Repellent bzw. Insektizid eingesetzt;

Die "Zusammensetzung 36" basierte auf dem Kernträger der enthält 95 Gewichtsprozent fein vermahlenes natürliches Mineral aus der Gruppe 5 "Carbonate und Nitrate" laut Strunz Systematik (9. Auflage) mit CAS-Nummer 13397-26-7, kombiniert mit 5 Gewichtsprozent mit Substanz CAS-Nummer 89-82-7 kombiniert.

Die "Zusammensetzung 37" basierte auf Schichtsilikat als Kernträger. Sie enthält 95 Gewichtsprozent fein vermahlener (d98-Wert von weniger als 50 µm) natürliches Mineral aus der Montmorillonitgruppe (>80% Montmorillonite), kombiniert mit 5 Gewichtsprozent mit Substanz CAS-Nummer 89-82-7 kombiniert.

Die "Zusammensetzung 38" basierte auf dem Kernträger der hauptsächlich aus den fein vermahlenen fossilen Überresten von Diatomeen besteht, kombiniert mit 5 Gewichtsprozent mit Substanz CAS-Nummer 89-82-7 kombiniert.

Die "Zusammensetzung 39" basierte auf dem Kernträger "4A". Sie enthält 95 Gewichtsprozent fein vermahlener synthetischer Zeolith mit einer kubischen Kristallstruktur und einer gleichmäßigen Porengröße von etwa 4 Angström, kombiniert mit 5 Gewichtsprozent mit Substanz CAS-Nummer 89-82-7 kombiniert.

Auf der Basis dieser Zusammensetzungen wurden wässrige Suspensionen hergestellt, wobei ein Verhältnis von 1:2,5 von Produkt zu Wasser verwendet wurde. Diese Suspensionen wurden anschließend mit einer geeigneten Methode auf die inerte Oberfläche aufgetragen. Die Proben wurden gemäß den vorgesehenen Methoden entnommen.

Mit Hilfe von GC/MS wurde der Restgehalt des Wirkstoffs nach der Anwendung an bestimmten Tagen gemessen und als Prozentsatz der Ausgangskonzentration (100%) angegeben.

**Tabelle 7: Einfluss von Kernträger auf die Wirkstoffretention (CAS-Nummer 89-82-7) nach der Anwendung. Gehalt an Wirkstoff nach der Anwendung im Vergleich zu Anfangsmenge [Gew.-%]**

| | Tag 0 | Tag 1 | Tag 4 | Tag 7 |
|---|---|---|---|---|
| Zusammensetzung 35 | 88,4 | 61, 9 | 47,0 | 15,7 |
| Zusammensetzung 36 | 81 | 0,7 | 0,5 | - |
| Zusammensetzung 37 | 81 | 74,6 | 9,6 | - |
| Zusammensetzung 38 | 74,2 | 9,8 | 2,8 | 0,8 |
| Zusammensetzung 39 | 92,1 | 0,6 | 0,5 | - |

Anschließend wurden die synergistischen Effekte mit Additiven aus der Gruppe Schichtsilikate untersucht.

In diesem Versuch wurde Zusammensetzung 35 folgende Zusatzstoffe beigefügt:
- Zusammensetzung 40. Additiv 4 Schichtsilicat aus der Saponitgruppe mit eine Chemische Formel: (Ca,Na)_{0.3}(Mg,Fe)₃(Si,Al)₄O₁₀(OH)₂·4H₂O mit einem d98-Wert von weniger als 500 pm wurde in einen Anteil von 33 Gew.% hinzugefügt.
- Zusammensetzung 41. Additiv 5 Schichtsilikat aus der Saponitgruppe; fein vermahlener (d98-Wert von weniger als 50 µm) natürliches Mineral aus der Montmorillonitgruppe (>80% Montmorillonite) in einen Anteil von 50 Gew.% hinzugefügt.
- Zusammensetzung 42. Additiv 5 Schichtsilikat aus der Saponitgruppe; fein vermahlener (d98-Wert von weniger als 50 µm) natürliches Mineral aus der Montmorillonitgruppe (>80% Montmorillonite) in einen Anteil von 33 Gew.% hinzugefügt
- Zusammensetzung 43. Additiv 4 Schichtsilikat aus der Saponitgruppe mit eine Chemische Formel: (Ca,Na)_{0.3}(Mg,Fe)₃(Si,Al)₄O₁₀(OH)₂·4H₂O mit einem d98-Wert von weniger als 500 pm wurde in einen Anteil von 25 Gew.% und Additiv 5 Schichtsilikat aus der Saponitgruppe; fein vermahlener (d98-Wert von weniger als 50 µm) natürliches Mineral aus der Montmorillonitgruppe (>80% Montmorillonite)in einen Anteil von 25 Gew.% hinzugefügt.

Auf der Basis dieser Zusammensetzungen wurden wässrige Suspensionen hergestellt, wobei ein Verhältnis von 1:2,5 von Produkt zu Wasser verwendet wurde. Diese Suspensionen wurden anschließend mit einer geeigneten Methode auf die inerte Oberfläche aufgetragen. Die Proben wurden gemäß den vorgesehenen Methoden entnommen.

Mit Hilfe von GC/MS wurde der Restgehalt des Wirkstoffs nach der Anwendung an bestimmten Tagen gemessen und als Prozentsatz der Ausgangskonzentration (100%) angegeben.

**Tabelle 8: Synergistischer Einfluss von Additiv 4 und Additiv 5 auf die langfristige Wirkstoffrückhaltung (CAS-Nummer 89-82-7) nach der Anwendung im Vergleich zu Anfangsmenge [Gew.-%].**

| | Tag 0 | Tag 1 | Tag 4 | Tag 7 | Tag 14 |
|---|---|---|---|---|---|
| Zusammensetzung 35 | 88,4 | 61,9 | 47,0 | 15,7 | 4,4 |
| Zusammensetzung 40 | 94,8 | 74,6 | 75,9 | 30,3 | 8,8 |
| Zusammensetzung 41 | 89,9 | 81,4 | 54,2 | 41,5 | 15,6 |
| Zusammensetzung 42 | 84,2 | 87,7 | 82,5 | 67,5 | 52,8 |
| Zusammensetzung 43 | 86,8 | 87,9 | 81,3 | 73,4 | 41,2 |

Dabei überaschenderweise wurde festgestellt, dass eine Kombination der identifizierten Additive einen synergistischen Effekt hat und die langsame Freisetzung des nach der Anwendung gewährleisten kann (siehe Tabelle 8).

## Patentansprüche

1. Feststoffgemisch umfassend
- 30 bis 90 Gew% mindestens eines Zeoliths,
- 1 bis 30 Gew% mindestens eines biologisch abbaubaren Oligosaccharids und/oder mindestens eines biologisch abbaubaren Polysaccharids,
- 5 bis 30 Gew% mindestens eines Schichtsilikats, und
- 0,001 bis 10 Gew% mindestens eines gegen Insekten wirksamen Wirkstoffs.

2. Feststoffgemisch nach Anspruch 1, **dadurch gekennzeichnet, dass** der mindestens eine Zeolith ausgewählt ist aus der Gruppe bestehend aus einem Zeolith der Strunz Klasse 9.GE und der Strunz Klasse 9.GD.

3. Feststoffgemisch nach Anspruch 1 oder 2, **dadurch gekennzeichnet, dass** das mindestens eine Schichtsilikat eine Partikelgröße D98 von weniger als 300 pm, vorzugsweise von weniger als 250 pm, noch bevorzugter von 0,1 bis 300 pm, noch bevorzugter von 0,1 bis 250 pm, noch bevorzugter von 0,2 bis 60 pm, aufweist und vorzugsweise ausgewählt ist aus der Gruppe bestehend aus einem Schichtsilikat der Strunz Gruppe 9.EC..

4. Feststoffgemisch nach einem der Ansprüche 1 bis 3, **dadurch gekennzeichnet, dass** der mindestens eine gegen Insekten wirksame Wirkstoff eine Semiochemikalie, ein Insektizid oder ein Repellent ist.

5. Feststoffgemisch nach Anspruch 4, **dadurch gekennzeichnet, dass** die Semiochemikalie auf Gliederfüßer, vorzugsweise auf Insecta, Arachnida und/oder Diplopoda, wirksam ist.

6. Feststoffgemisch nach Anspruch 4 oder 5, **dadurch gekennzeichnet, dass** die Semiochemikalie auf Lepidoptera und Coleoptera wirksam ist.

7. Feststoffgemisch nach einem der Ansprüche 4 bis 6, **dadurch gekennzeichnet, dass** das Insektizid ein natürlich vorkommendes Insektizid ist, vorzugsweise ausgewählt aus der Gruppe bestehend aus Pyrethrine, Neemöl, Orangenöl und Zimtöl.

8. Feststoffgemisch nach einem der Ansprüche 4 bis 7, **dadurch gekennzeichnet, dass** das Repellent ein Insektenrepellent ist.

9. Feststoffgemisch nach einem der Ansprüche 1 bis 8, **dadurch gekennzeichnet, dass** das Feststoffgemisch die Form eines Pulvers, eines Granulats oder einer Kombination davon aufweist.

10. Kit umfassend
a) ein Behältnis umfassend mindestens ein Zeolith wie in Anspruch 2 definiert,
b) ein Behältnis umfassend mindestens ein biologisch abbaubares Oligosaccharid und/oder Polysaccharid,
c) ein Behältnis umfassend mindestens ein Schichtsilikat wie in Anspruch 3 definiert, und
d) ein Behältnis umfassend mindestens einen gegen Insekten wirksamen Wirkstoff wie in einem der Ansprüche 4 bis 8 definiert.

11. Suspension umfassend ein Feststoffgemisch nach einem der Ansprüche 1 bis 9 und Wasser.

12. Suspension nach Anspruch 11, **dadurch gekennzeichnet, dass** das Gewichtsverhältnis zwischen dem Feststoffgemisch und dem Wasser und/oder dem organischen Lösungsmittel 1:1 bis 1:500 beträgt, vorzugsweise 1:1 bis 1:400, noch mehr bevorzugt 1:1 bis 1:300, noch mehr bevorzugt 1:1 bis 1:250, noch mehr bevorzugt 1:1 bis 1:200, noch mehr bevorzugt 1:1 bis 1:150, noch mehr bevorzugt 1:1 bis 1:100.

13. Verfahren zum Behandeln von Pflanzen oder Pflanzenteilen umfassend die Schritte:
a) Vermischen eines Feststoffgemisches nach einem der Ansprüche 1 bis 9 mit Wasser im Gewichtsverhältnis 1:1 bis 1:500 zur Herstellung einer wässrigen Suspension, und
b) Aufbringen der wässrigen Suspension aus Schritt a) auf eine Pflanze oder einem Pflanzenteil.

14. Verfahren nach Anspruch 13, **dadurch gekennzeichnet, dass** 1 bis 1000 Liter pro Hektar der wässrigen Suspension ausgebracht wird.

15. Verfahren nach Anspruch 13 oder 14, **dadurch gekennzeichnet, dass** die wässrige Suspension auf die Pflanzen oder dem Pflanzenteil durch Sprühen, vorzugsweise mit einer Drohne, aufgebracht wird.
